# EUROPEAN PATENT APPLICATION

(11) **EP 2 290 645 A2**
(43) Date of publication of application: **02.03.2011**
(21) Application number: 09746736.9
(22) Date of filing: 08.05.2009
(51) Int. Cl.: G11B 7/007, G11B 7/0045, G11B 7/005, G11B 7/004

(54) **RECORDING MEDIUM, RECORDING METHOD AND RECORDING DEVICE, AND PLAYBACK METHOD AND PLAYBACK DEVICE, FOR LONG-TERM DATA STORAGE**

(30) Priority: 14.05.2008 KR 20080044496; 14.08.2008 KR 20080079741; 14.08.2008 KR 20080079742; 14.08.2008 KR 20080079743; 10.11.2008 KR 20080110953
(71) Applicant: LG Electronics Inc., Seoul 150-721 (KR)
(72) Inventor: KIM, Sung Hoon, Seoul 137-724 (KR); PARK, Yong Cheol, Seoul 137-724 (KR); PARK, Chan Ho, Seoul 137-724 (KR); HONG, Sung Ho, Seoul 137-724 (KR)
(74) Representative: Katérle, Axel
(86) International application number: PCT/KR2009/002434
(87) International publication number: WO 2009/139557

(57) **Abstract**

A recording medium for archiving data, a recording method, a recording apparatus, a reproducing method, and a reproducing apparatus are disclosed. The recording medium includes a data area for recording user data and a management area for managing information recorded on the recording medium. The management information includes data archiving information.

## Description

### [Technical Field]

The present invention relates to a data recording medium, a recording method, and a recording apparatus, and more particularly, to a data recording medium for long-term storage, a recording method, and a recording apparatus.

### [Background Art]

An optical disc is a recording medium that facilitates information recording and storage. However, long-term storage of information degrades the quality of the optical disc with passage of time. Along with the development of new technologies for data recording and retrieval, a future standard recording and reproduction apparatus may not retrieve data that has been recorded on an optical disc in a conventional technology. Accordingly, the reliability of information recorded and archived for a long time on an optical disc may not be guaranteed and the information may not even backed up onto a new recording medium.

In spite of being manufactured by the same manufacturer, discs differ in quality in some cases. Hence, a timely backup may be missed as regards to the quality degradation of a disc.

Accordingly, there exists a need for archiving data on a recordable disc used for data archival and also for recording information about disc quality and disc status on the disc for long-term management.

### [Disclosure]

### [Technical Problem]

An object of the present invention devised to solve the problem lies on recording of information required for data archival on a disc so that a user may efficiently keep intended data with reliability for a long time.

### [Technical Solution]

The object of the present invention can be achieved by providing a recording medium including a data area for recording user data, and a management area for managing information recorded on the recording medium, the management information including data archiving information. The management area may be a control data zone included in a lead-in area of the recording medium, for recording control information about the user data. The management area may be a burst cutting area positioned inner than a lead-in area of the recording medium, for recording code-related information about the recording medium. The management area may be a recording management area positioned inner than a lead-in area of the recording medium, for managing recording of the user data.

The data archiving information may include information about an estimated archival lifetime of the recording medium or information about a range of the estimated archival lifetime. The range may be defined by lower and upper limits of the estimated archival lifetime, or may be recorded as grade information about the estimated archival lifetime.

The data archiving information may include information about an accreditation result of the quality of the recording medium or information about a recommended test interval for data archival in the recording medium.

The recording medium may include a plurality of layers. The data archiving information may be recorded in a sequential manner from one layer to another layer or simultaneously in the plurality of layers.

In another aspect of the present invention, provided herein is a data recording method including determining an archival suitability of a recording medium including a management area for recording management information to manage information recorded on the recording medium, and determining whether to move the information recorded on the recording medium to another recording medium according to the determined archival suitability.

The data recording method may further include recording the determined archival suitability in the management area. The data recording method may further include backing up the information recorded on the recording medium.

In another aspect of the present invention, provided herein a data reproduction method including reading a result of an archival suitability determination about a recording medium including a management area for recording management information to manage information recorded on the recording medium.

In a further aspect of the present invention, provided herein a data recording apparatus including a pick-up for recording data on a recording medium by projecting light, and a controller for controlling the pick-up to record a result of a archival suitability determination about the recording medium in a management area for recording management information to manage information recorded on the recording medium.

### [Advantageous Effects]

A data recording medium, a recording method, and a recording apparatus according to exemplary embodiments of the present invention enable a user to efficiently keep intended data with reliability for a long time.

### [Description of Drawings]

The accompanying drawings, which are included to provide a further understanding of the invention, illustrate embodiments of the invention and together with the description serve to explain the principle of the invention.

In the drawings:
FIG. 1 illustrates the physical structure of a recordable recording medium according to an exemplary embodiment of the present invention.
FIG. 2 is a schematic view illustrating a recording medium according to an exemplary embodiment of the present invention.
FIG. 3 is a schematic view illustrating a lead-in area illustrated in FIG. 2.
FIG. 4 is a schematic view illustrating an exemplary method for recording an initial manufacturing date.
FIGs. 5 and 6 are schematic views illustrating exemplary methods for recording a recommended recording medium replacement date.
FIGs. 7, 8 and 9 are schematic views illustrating exemplary methods for recording an estimated archival lifetime of a recording medium.
FIG. 10 is a schematic view illustrating an exemplary method for recording an accreditation result.
FIGs. 11 and 12 are schematic views illustrating exemplary methods for recording a recommended test interval.
FIGs. 13 and 14 are schematic views illustrating exemplary methods for recording an indicator indicating whether a recording medium is a calibration recording medium.
FIG. 15 is a schematic view illustrating the structure of a recording medium having a Burst Cutting Area (BCA) 400 according to another exemplary embodiment of the present invention.
FIG. 16 is a plan view illustrating the position of the BCA 400 or a Narrow Burst Cutting Area (BCA/NBCA) in the recording medium.
FIG. 17 illustrates a data structure of a BCA/NBCA CODE.
FIG. 18 illustrates a format of a BCA/NBCA record that is recorded in a data field.
FIG. 19 is a table listing a plurality of records recorded in a Data field.
FIG. 20 illustrates recording of data archiving information in the BCA/NBCA of the recording medium illustrated in FIG. 15.
FIG. 21 illustrates a track status of a recording medium being a DVD when data archiving information is recorded in a Recording Management Area (RMA) according to a further exemplary embodiment of the present invention.
FIG. 22 illustrates a plan view illustrating the structure of the RMA.
FIG. 23 is a table listing a plurality of fields included in each RMD block of the RMA.
FIG. 24 is a table listing updatable data archiving information that may be recorded in a field illustrated in FIG. 23.
FIG. 25 is a table listing the contents of a field having general disc information.
FIG. 26 is a schematic view illustrating a track status of a recordable recording medium in which data archiving information is recorded in an RMA, especially when the recording medium is a Dual-Layer DVD (DVD-DL) according to another exemplary embodiment of the present invention.
FIG. 27 is a table listing a plurality of fields included in an RMD block of the DVD-DL.
FIG. 28 is a table listing RMD fields in Format 5.
FIG. 29 is a table listing BPs of RMD Field 0 610 for each RMD format.
FIG. 30 is a table illustrating RMD Field 0 in which general disc information is recorded in the DVD-DL.
FIGs. 31 and 32 illustrate recording of an expected archiving lifetime of a disc in the BCA 400 illustrated in FIG. 15.
FIGs. 33 to 36 illustrate recording of the expected archiving lifetime of the disc in an RMA 502 illustrated in FIG. 21 and an RMA 601 illustrated in FIG. 26.
FIGs . 37 and 38 illustrate recording of the expected archiving lifetime of the disc in a control data zone illustrated in FIG. 3.
FIG. 39 is a schematic view illustrating a data archiving system according to an exemplary embodiment of the present invention.
FIG. 40 is a flowchart illustrating a data recording method according to an exemplary embodiment of the present invention.

### [Best Mode]

Reference will now be made in detail to the preferred embodiments of the present invention, examples of which are illustrated in the accompanying drawings.

Prior to describing the present invention, it is to be noted that most terms disclosed in the present invention correspond to general terms well known in the art, but some terms have been selected by the applicant as necessary and will hereinafter be disclosed in the following description of the present invention. Therefore, it is preferable that the terms defined by the applicant be understood on the basis of their meanings in the present invention.

Exemplary embodiments of the present invention are applicable to all optical discs including a Compact Disc (CD), a Digital Versatile Disc (DVD), a Blu-ray Disc (BD), High-Definition DVD (HD-DVD), etc.

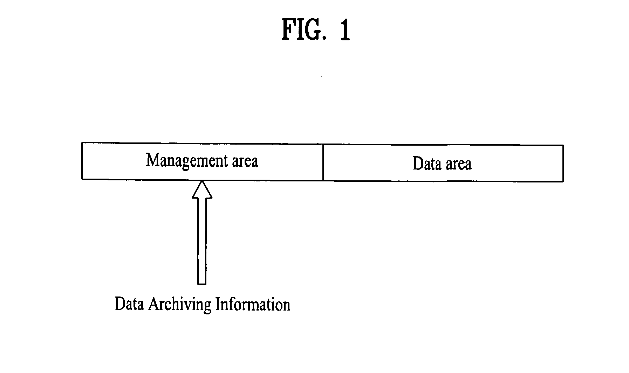

FIG. 1 illustrates the physical structure of a recordable recording medium according to an exemplary embodiment of the present invention.

Referring to FIG. 1, each layer of the recording medium according to the exemplary embodiment of the present invention includes a data area for recording user data and a management area for storing management information with which to manage the recorded information. The information recoded on the recording medium may be lost depending on the status of the recording medium. Hence, information with which to manage the recorded information is required. As such management information, data archiving information may be stored in the management area.

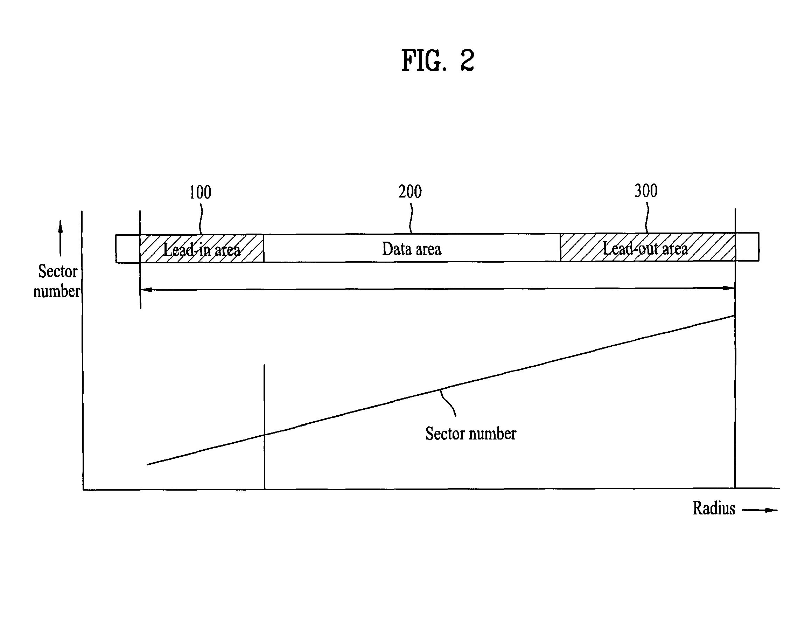

FIGs. 2 to 14 illustrate an exemplary embodiment of the present invention in which the data archiving information is stored in a lead-in area 100.

FIG. 2 is a schematic view illustrating a recording medium including the lead-in area 100 according to the exemplary embodiment of the present invention.

Referring to FIG. 2, the recording medium according to the exemplary embodiment of the present invention may include the lead-in area 100, a data area 200, and a lead-out area 300. A physical sector number increases from the lead-in area 100 to the lead-out area 300, i.e. toward the outer periphery of the disc. User data is recorded and archived in the data area 200.

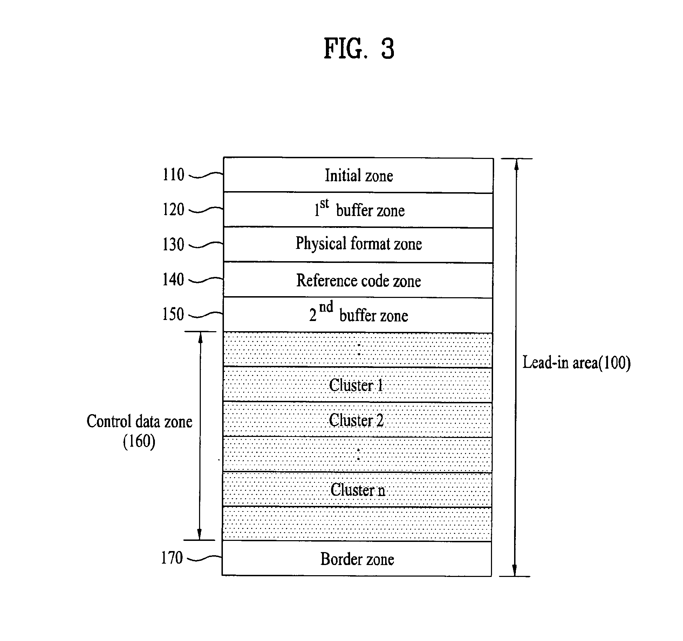

FIG. 3 illustrates a detailed structure of the lead-in area 100 illustrated in FIG. 2. Referring to FIG. 3, the lead-in area 100 includes an initial zone 110, a first buffer zone 120, a physical format zone 130, a reference code zone 140, a second buffer zone 150, a control data zone 160, and a border zone 170, sequentially in this order from the inner periphery of the recording medium.

Main data of a data frame may be set to 'OOh' representing blank in a physical sector in the initial zone 110.

The first buffer zone 120 may be composed of 32 Error Correction Coding (ECC) blocks and 512 sectors. Main data of a data frame may be set to 'OOh' in a physical sector of the first buffer zone 120.

As illustrated in FIG. 3, the control data zone 160 may include a plurality of clusters. In the recording medium according to the exemplary embodiment of the present invention, information about the initial manufacturing date of the recording medium is recorded in the control data zone 160. Some manufacturers do not record the manufacturing dates of recording mediums and even though other manufacturers record manufacturing dates, they do in different manners, thus making it difficult to find out them. That's why the manufacturing date information is recoded in the lead-in area 100 of the recording medium.

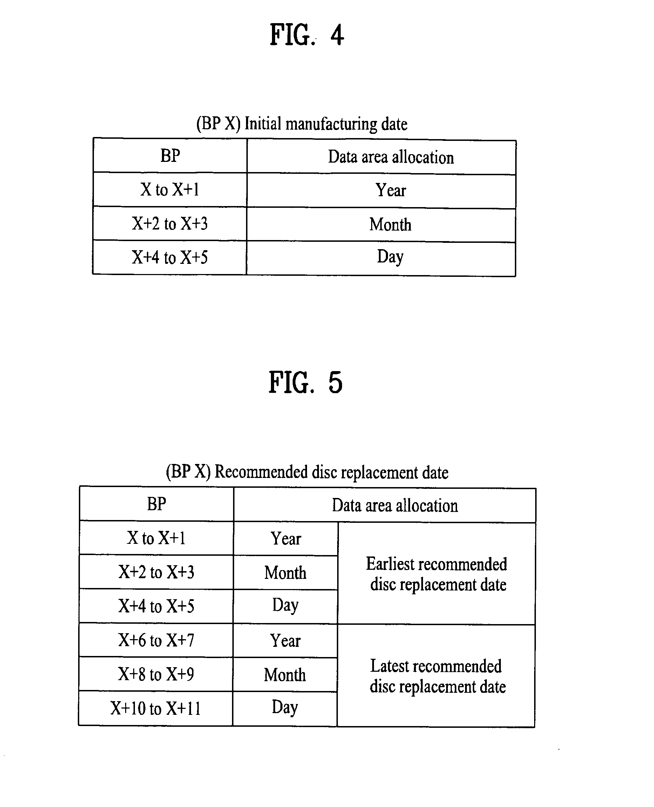

FIG. 4 illustrates an exemplary method for recording the initial manufacturing date of the recording medium. The manufacturing date information may be recorded in six bytes, two bytes for each of Year/Month/Day in the control data zone 160.

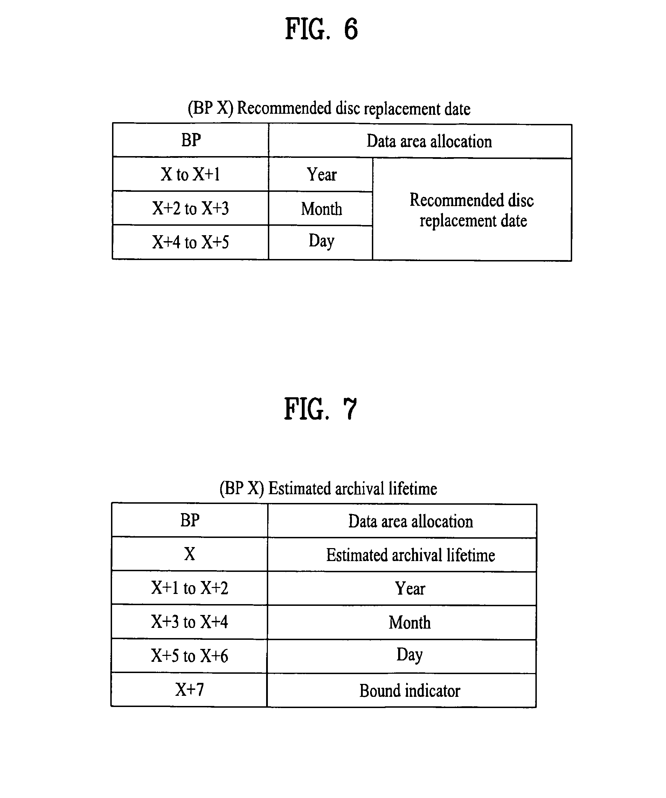

FIGs. 5 and 6 illustrate exemplary methods for recording a recommended disc replacement date of the recording medium. Specifically, FIG. 5 illustrates an example of recording a recommended replacement date range and FIG. 6 illustrates an example of recording a recommended replacement date in the form of a single value. In accordance with the exemplary embodiment of the present invention, the recommended replacement date information may be recorded in the physical format zone 130.

FIGs. 7, 8 and 9 illustrate exemplary methods for recording an estimated archival lifetime of the recording medium.

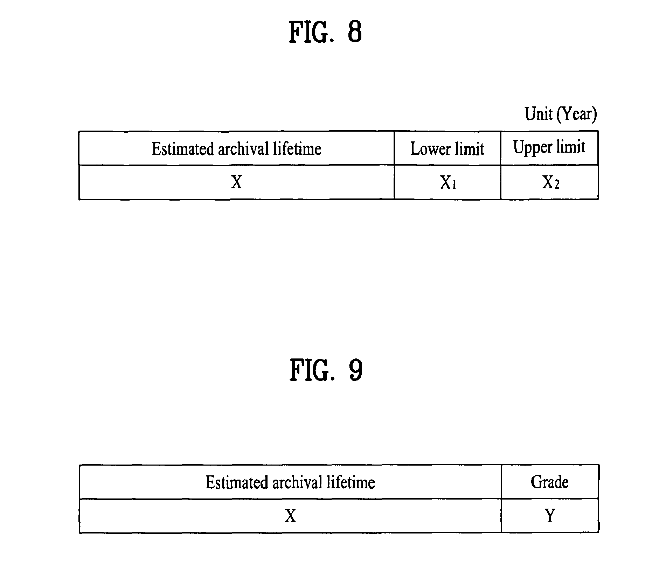

Referring to FIG. 7, a date on which the recording medium was verified regarding its lifetime is represented in six bytes, two bytes for each of Year/Month/Day. In FIG. 8, one byte is allocated to each of a lower limit, X₁ and an upper limit X₂ in indicators representing an estimated archival lifetime range. The estimated archival lifetime may be represented as the number of years in one byte.

For example, some of discs produced in the same manufacturing line are selected as samples and their lifetimes are estimated in compliance with European Computer Manufacturer's Association-379 (ECMA-379) or International Standard Organization/International Electrotechnical Commission 1095 (ISO/IEC 1095) standards. Referring to FIG. 8, if the estimated archival lifetime is X years, its lower and upper limits X₁ and X₂ are set based on X. If the average estimated archival lifetime of the disc samples is 30 years, ranges of +5 and -5 may be set so that the lower limit is written as 25 years and the upper limit is written as 35 years. Or the ranges may be determined to be +3 and -3, respectively such that the lower and upper limits are written as 27 years and 33 years, respectively. The estimated archival lifetime range may be set freely to values other than +5 and -5, and +3 and -3, in order to set the lower and upper limits.

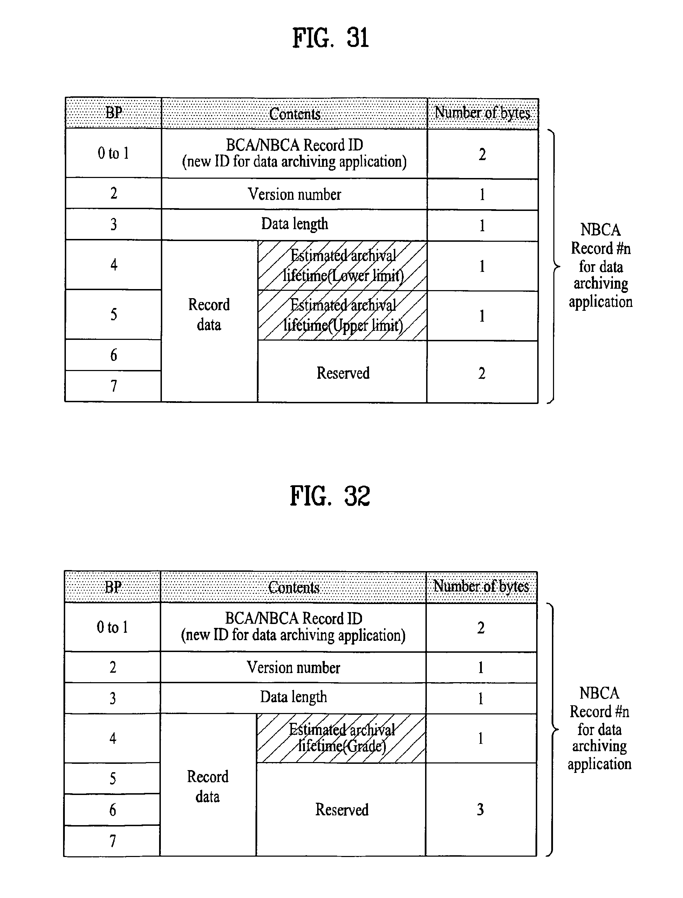

Referring to FIG. 9, information about the estimated archival lifetime of the recording medium may be written as a grade. For instance, if the estimated archival lifetime is equal to or longer than 50 years, it is written as grade 1. The estimated archival lifetime information is written as grade 2 for an estimated archival lifetime equal to or longer than 30 years and below 50 years, and as grade 3 for an estimated archival lifetime below 30 years. Various recording media on which the estimated archival lifetime information is recorded in the manners illustrated in FIGs. 8 and 9 will be described later with reference to FIGs. 31 to 38.

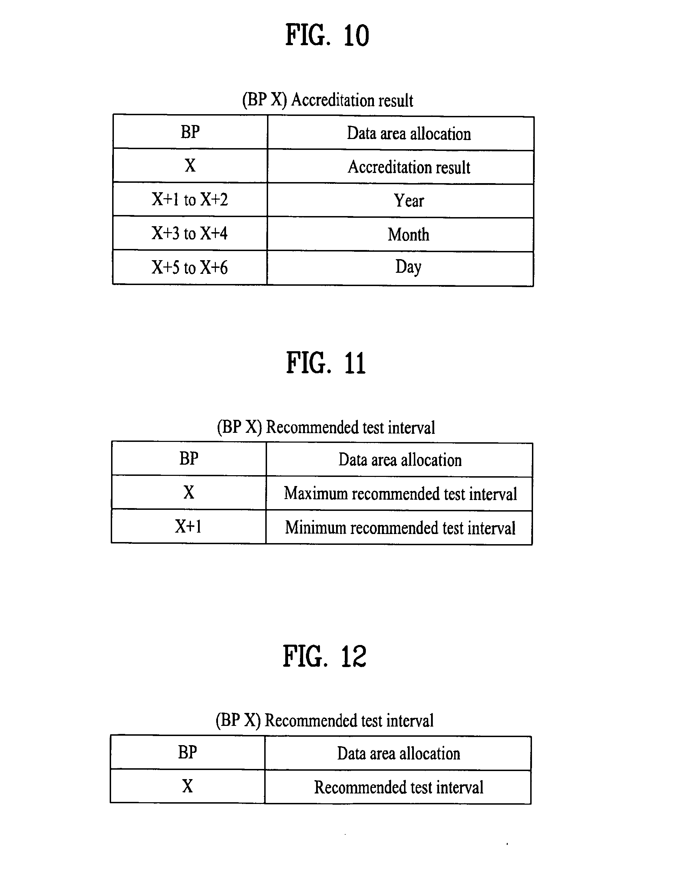

FIG. 10 illustrates an exemplary method for recording an accreditation result. High quality is required especially for a disc for data archiving application due to its nature of long-term data storage. Accordingly, an accreditation system may be used to verify the quality of the disc for data archiving application and record the result of the verification (i.e. an accreditation result). Referring to FIG. 10, information about the accreditation result may be recorded in one byte to indicate the accreditation result and in six bytes to indicate the verification date of the recording medium.

In accordance with the exemplary embodiment of the present invention, information about a recommended test interval is recorded in the recording medium, taking into account the quality and estimated archival lifetime of the recording medium. The test interval is indicated as the number of years and may be recorded in the form of a minimum interval and a maximum interval or as a single value.

The minimum and maximum values of the recommended test interval are recorded in FIG. 11, whereas the recommended test interval is given as a single value in FIG. 12.

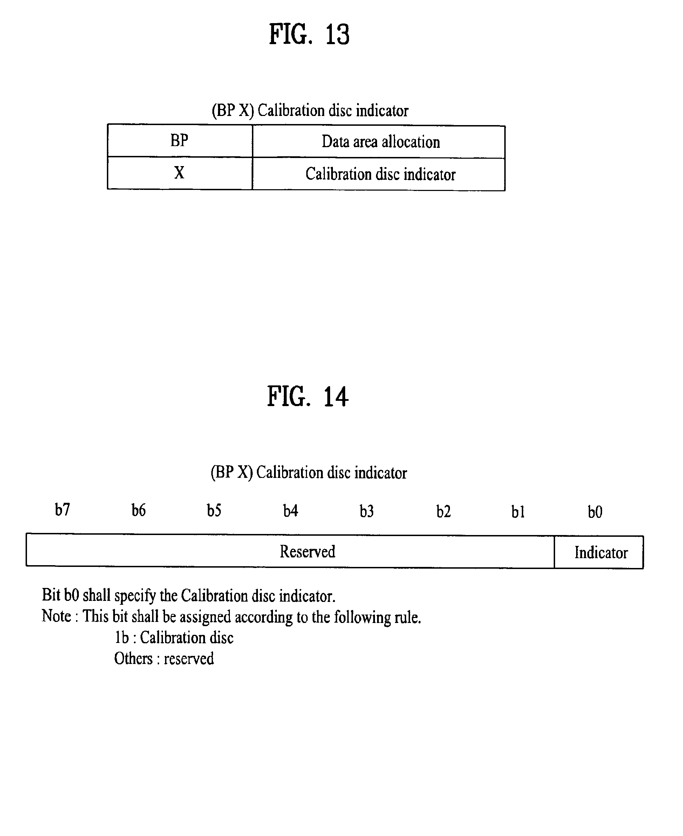

Information indicating whether the recording medium is a data recording medium or a calibration recording medium for calibration of a recording and reproduction apparatus that archives data is further recorded in the recording medium. FIG. 13 illustrates an example of recording a calibration recording medium indicator and FIG. 14 illustrates an example of setting the indicator illustrated in FIG. 13.

The foregoing data archiving information is recorded in the control data zone of the lead-in area according to the exemplary embodiment of the present invention, to which the exemplary embodiments of the present invention are not limited. Hence, the data archiving information may be recorded at other positions in the lead-in area or in an area other than the lead-in area.

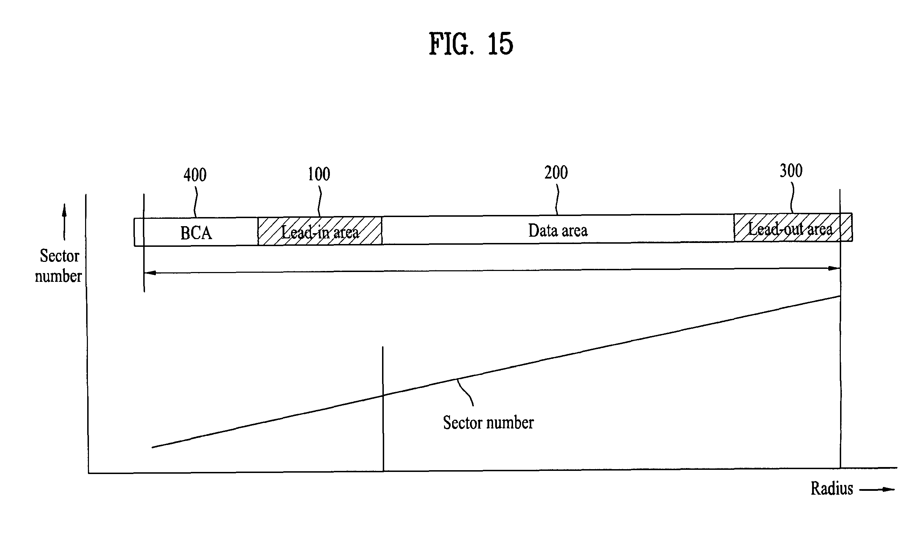

FIGs. 15 to 19 illustrate another exemplary embodiment of the present invention in which data archiving information is recorded in a Burst Cutting Area (BCA) 400.

FIG. 15 is a schematic view illustrating the structure of a recording medium having the BCA 400 according to another exemplary embodiment of the present invention.

Referring to FIG. 15, the tracks of the recordable recording medium according to the exemplary embodiment of the present invention may include the BCA 400, the lead-in area 100, the data area 200, and the lead-out area 300, sequentially from the center of the recording medium.

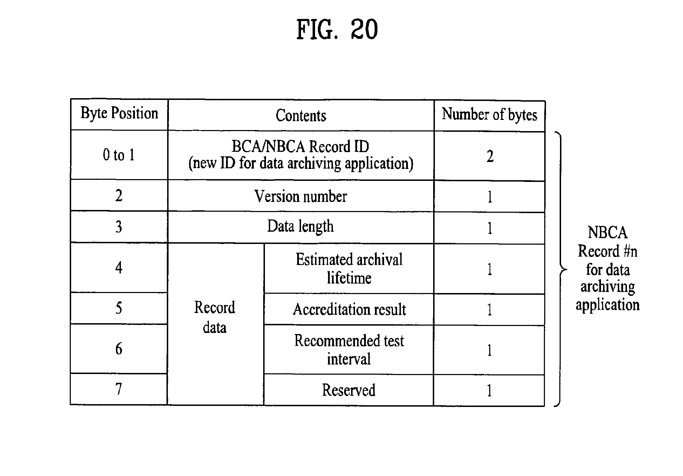

Information about the serial number and manufacturer of an optical disc is recorded in the form of a bar code in the BCA 400. Also, the BCA 400 may include data archiving information including an estimated archival lifetime of the recording medium, information about an accreditation result of the quality of the recording medium, and information about a recommended test interval for data archiving in the recording medium, and a record Identifier (ID) for identifying a record having the data archiving information. Information about the position of the data archiving information in the BCA 400 will be described later with reference to FIG. 20.

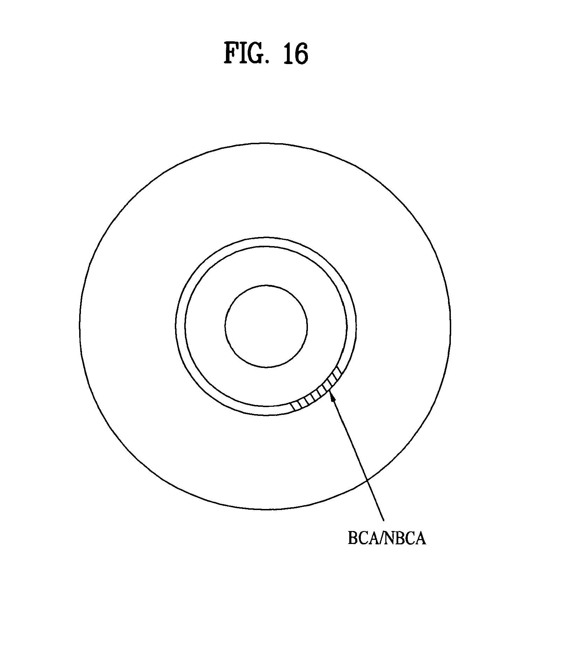

FIG. 16 is a plan view illustrating the position of the BCA 400 or a Narrow Burst Cutting Area (BCA/NBCA) in the recording medium. In the case of a DVD-Recordable (DVD-R), the BCA/NBCA is defined between 22.71±0.06mm and 23.51±0.06mm from the center of the center hole of the disc, after the DVD-R is manufactured by a media manufacturer. Since the media manufacturer records information in the BCA/NBCA, reliability is ensured for the information and the information is more easily and faster retrieved than from the lead-in area.

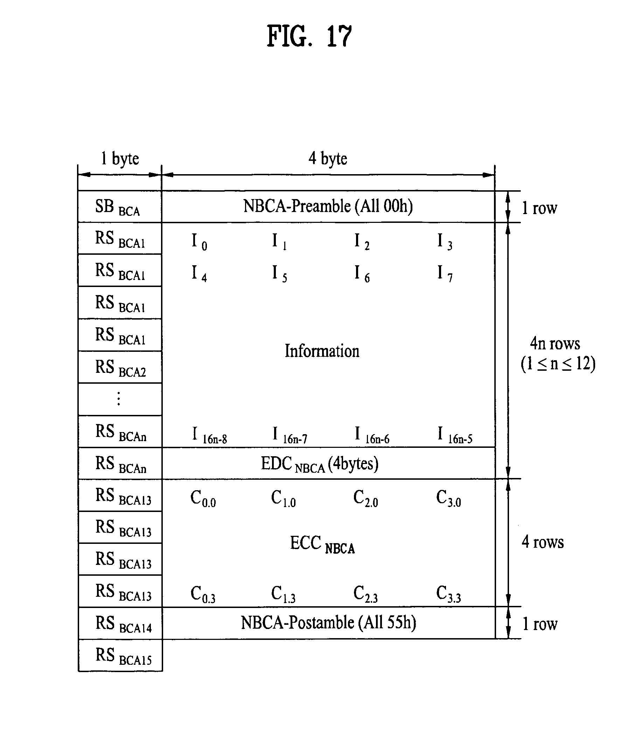

FIG. 17 illustrates a data structure of a BCA/NBCA CODE. The BCA/NBCA CODE includes a Preamble field, an Error Detection Code (EDC) field, a Data field, an ECC, and a Postamble field. Data is recorded on a BCA/NBCA record basis in the Data field. Each record is composed of a Record ID, a Version number, a Data length, and Record data. Each record is written on the basis of four bytes. The BCA/NBCA Record ID, the Version number, and the Data length are written in the first four bytes and the Record data are allocated to a size of a multiple of 4 in the remaining area.

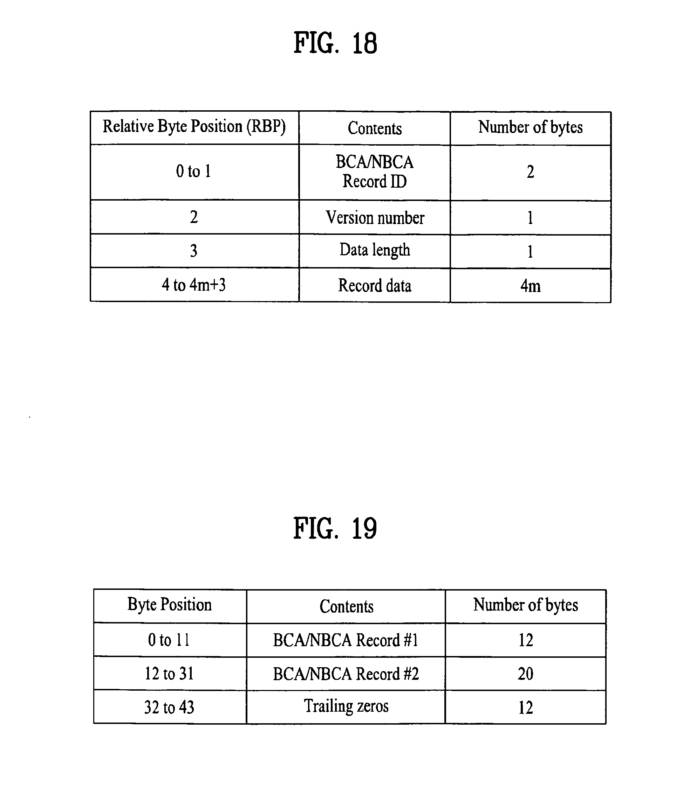

FIG. 19 is a table listing a plurality of records recorded in the Data field. After BCA/NBCA Record #1 and BCA/NBCA Record #2 are recorded, the remaining area is padded with trailing zeroes, for matching to a size of (16n-4) bytes.

FIG. 20 illustrates an example of recording data archiving information in the BCA/NBCA according to the exemplary embodiment of the present invention. A new BCA/NBCA Record ID is allocated to a record and an estimated archival lifetime, an accreditation result, and a recommended test interval are recorded in a record data area of the record. The new BCA/NBCA Record ID indicates that data archiving information is recorded in the record. The estimated archival lifetime, the accreditation result, and the recommended test interval as the data archiving information have been described before with reference to FIGs. 2 to 14.

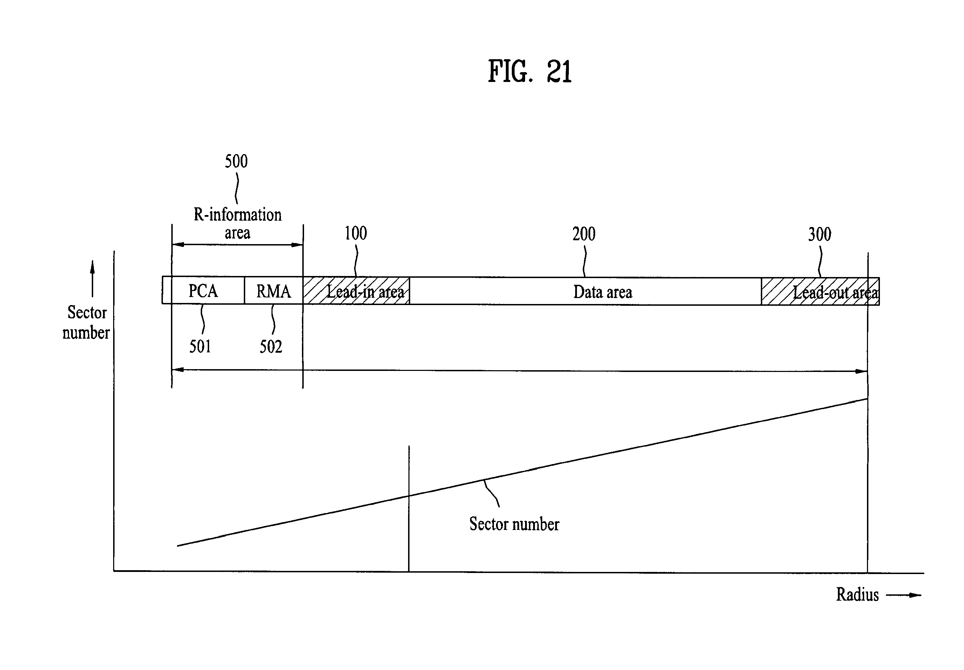

FIGs. 21 to 25 illustrate a track status of a recordable recording medium in which data archiving information is recorded in a Recording Management Area (RMA) 502, especially when the recording medium is a DVD according to another exemplary embodiment of the present invention.

Referring to FIG. 21, the tracks of the recordable recording medium according to the exemplary embodiment of the present invention may include the lead-in area 100, the data area 200, the lead-out area 300, and an R-information area 500.

The R-information area 500 is positioned along the inner circumference of the lead-in area 100. The R-information area 500 includes a Power calibration Area (PCA) 501 responsible for an Optimum Power Calibration (OPC) operation and the RMA 502 for recording management information with which to record data on the recording medium and data archiving information. A 32-KB linking loss area is interposed between the PCA 501 and the RMA 502.

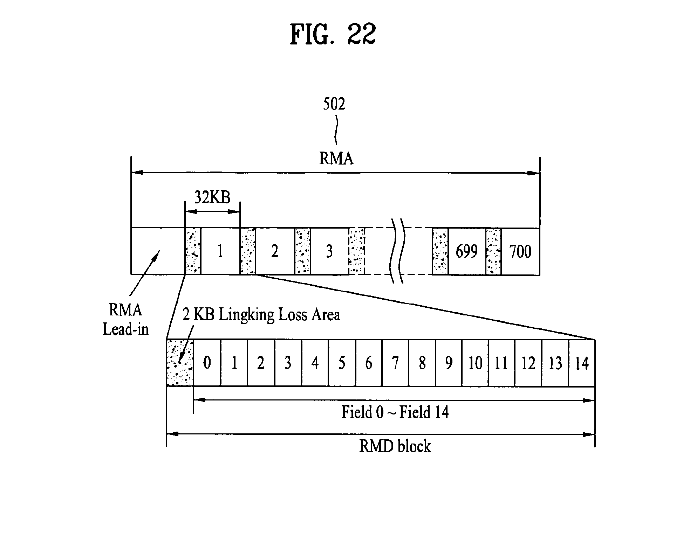

FIG. 22 illustrates a plan view illustrating the structure of the RMA 502.

Referring to FIG. 22, the RMA 502 includes an RMA lead-in area and 700 Recording Management Data (RMD) blocks. Each RMD block includes a 2-KB linking loss area and a total of 15 fields ranging from Field 0 to Field 14.

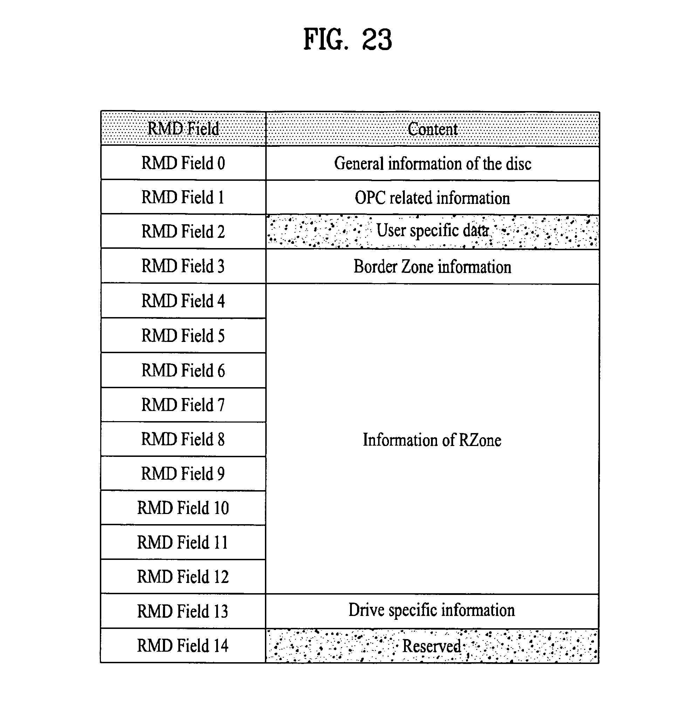

FIG. 23 is a table listing a plurality of fields included in each RMD block of the RMA.

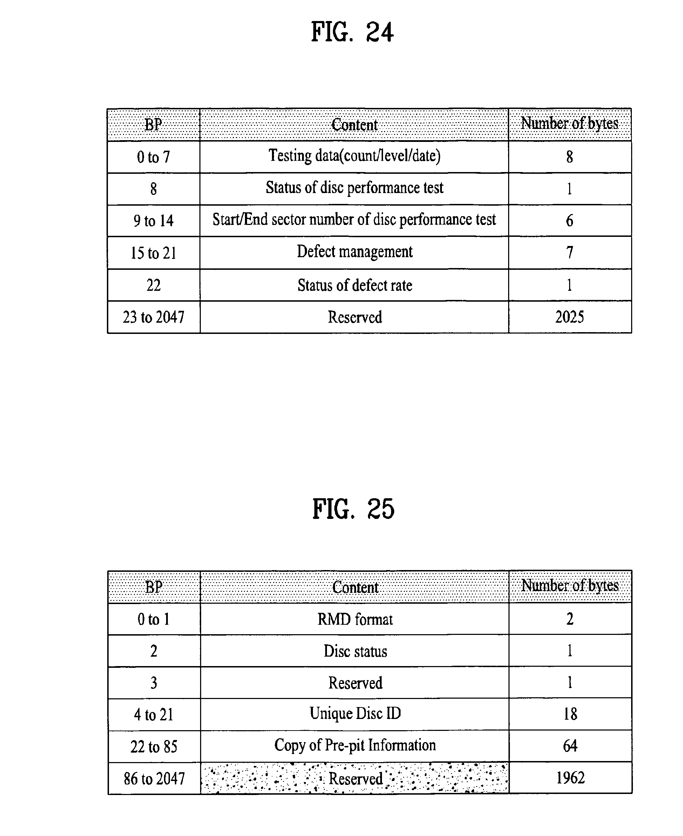

Referring to FIG. 23, RMD Field 0 is related to general disc information. The afore-described data archiving information including an estimated archival lifetime, an accreditation result, a recommended test interval of the recording medium, and the like may be further recorded in RMD Field 0. The data archiving information has been described before with reference to FIGs. 2 to 14. Considering that once the data archiving information is recorded on the disc after an archival suitability test of the recording medium, it does not need updating, it may be preferable to record the data archiving information in RMD Field 0 relating to the general disc information. Referring to FIG. 25, RMD Field 0 includes RMD format indicating an RMD format, Disc status, Unique Disc ID, Copy of Pre-pit Information, and Reserved. The data archiving information may be recorded especially in the Reserved area of RMD Field 0.

RMD Field 2 is related to user specific data. A test date, a test count, information about verification of all or part of the recording medium, information about a data archival level, information about defect management, and defect rate information as listed in FIG. 24 may be recorded in RMD Field 2. It is necessary to continuously update the listed information of FIG. 24 by performing an archival suitability test a plurality of times. In this context, it may be preferable to record the information in RMD Field 2. In other words, a user performs a plurality of tests once or more times regularly and test results may be updated twice to 700 times. If no data is written in RMD Field 2, RMD Field 2 is set to '00h'.

RMD Field 1 provides OPC-related information, RMD Field 3 has border zone information, and RMD Field 4 to RMD Field 12 are related to information about an RZone being part of a reserved area for data recording. RMD Field 13 has drive specific information. Each RMD field is 2KB and the remaining area is reserved. The information listed in the table of FIG. 24 that is recorded in RMD Field 2 may be stored in RMD Field 14 reserved for future use.

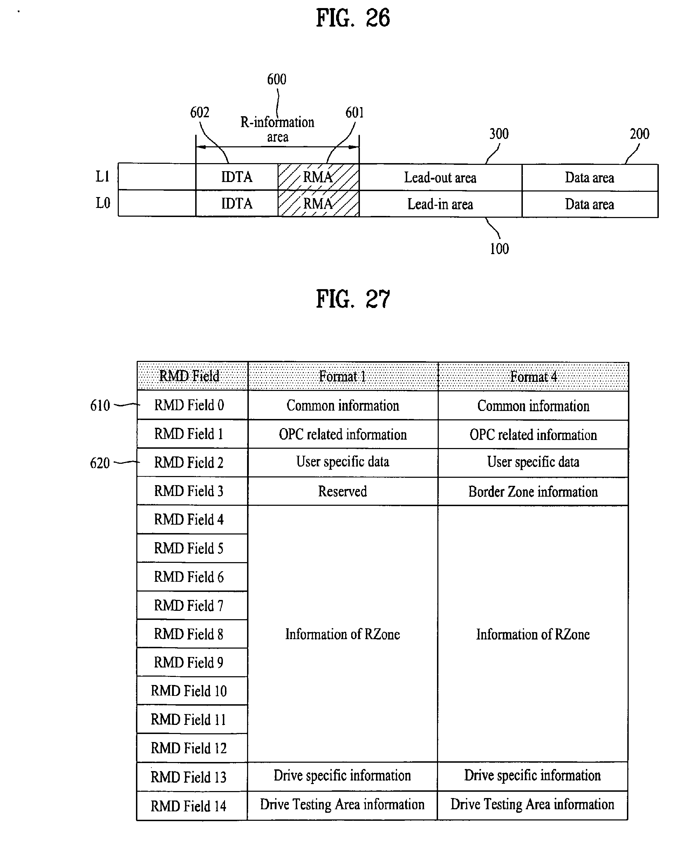

FIGs. 26 to 30 schematically illustrate a track status of a recordable recording medium in which data archiving information is recorded in an RMA 601, especially when the recording medium is a Dual-Layer DVD (DVD-DL) according to a further exemplary embodiment of the present invention.

Referring to FIG. 26, the DVD-DL includes the data area 200 and an R-information area 600. The DVD-DL further has the lead-in area 100 in Layer 0 (L0) and the lead-out area 300 in Layer 1 (L1).

User data are recorded in the data area 200 and the lead-in area 100 includes physical sectors near to the inner circumference of the data area 200 in L0. The lead-out area 300 includes physical sectors near to the inner circumference of the data area 200 in L1.

The R-information area 600 resides along the inner circumferences of the lead-in area 100 and the lead-out area 300. The R-information area 600 includes an Inner Disc Testing Area (IDTA) 602 along the inner circumference of the disc, for recording disc testing information, and the RMA 601 for storing management information with which to manage information recorded on the recording medium. The RMA 601 and the management information will be described later with reference to FIGs . 27 to 30. The RMA 601 also includes an RMA lead-in area and RMD blocks for recording RMD associated with information recorded in the recording medium.

FIG. 27 is a table listing a plurality of fields included in an RMD block of the DVD-DL.

Referring to FIG. 27, two RMD formats, Format 1 and Format 4 are defined for the DVD-DL. In Format-1, an incremental recording mode and a disc at once mode are available. The incremental recording mode is characterized in that data are recordable in the remaining area after part of the disc is used. On the other hand, data are sequentially recorded on the disc and once they are recorded, data are not recordable again on the same disc in the disc at once mode. For Format 4, the incremental recording mode and a layer jump recording mode are available. The layer jump recording mode allows for alternate data recording between an upper layer and a lower layer in a disc. While L1 is reached by sequentially recording data on L0 in the disc at once mode of Format 1, data may be alternately recorded between L0 and L1 simultaneously in the layer jump recording mode of Format 4. In Format 1 and Format 4, RMD Field 0 610 has disc common information, RMD Field 1 provides OPC-related information, RMD Field 2 620 has user specific data, RMD Field 4 to RMD Field 12 have information about an RZone being part of a reserved area for user data recording, RMD Field 13 has drive specific information, and RMD Field 14 disc testing area information. Different data are set in RMD Field 3 depending on Format 1 or Format 4. RMD Field 3 is set to 00 in Format 1, while it has border zone information in Format 4.

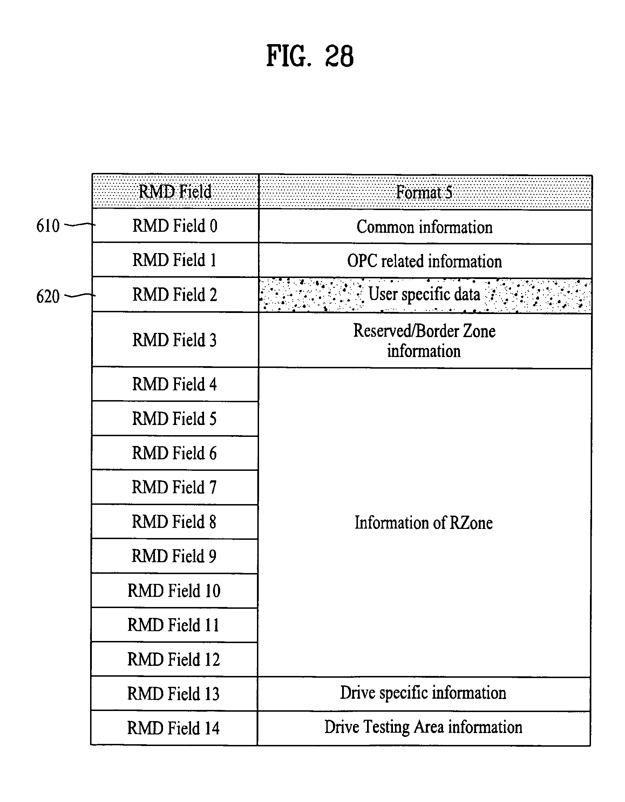

The afore-described data archiving information may be recorded in RMD Field 2 620 of Format 1 or Format 4 that has user specific data, or in RMD Field 2 650 of Format 5 illustrated in FIG. 28. Format 5 is similar to Format 1 and Format 4 except that RMD Field 3 is reserved or provides border zone information depending on the disc at once mode or the layer jump recording mode.

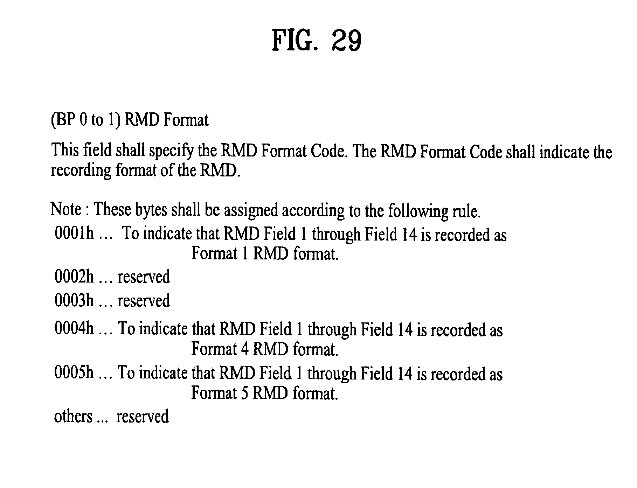

Format 1, Format 4 and Format 5 may be identified by Byte Positions (BPs) corresponding to RMD Field 0 610. Information indicating an RMD format is stored in BP 0 to 1. Referring to FIG. 29, if BP 0 to 1 are set to '0001h', this means that the contents of RMD Field 1 to RMD Field 14 are recorded in Format 1. If BP 0 to 1 are set to '0004h', this implies that they are recorded in Format 4. BP 0 to 1 are set to '0005h' to indicate that the contents are recorded in Format 5.

The DVD-DL according to the further exemplary embodiment of the present invention may also have the data archiving information described in FIG. 24, that is, a test date, a test count, information about verification of all or part of the recording medium, information about a data archiving level, information about defect management, and defect rate information as data archiving information in RMD Field 2 620 of FIGs. 27 and 28. Data migration may be carried out by a plurality of data archiving suitability tests on the recording medium. The information listed in FIG. 24 needs continuous updating through the data migration. Therefore, it may be preferable to record the listed information in RMD Field 2 620 of FIGs. 27 and 28. Along with the listed information, the data archiving information including the estimated archival lifetime, the accreditation result, and the recommended test interval as described before with reference to FIGs. 2 to 14 may be recorded. This data archiving information does not need updating, once it is recorded as a result of a data archival suitability test. Hence, the data archiving data may be recorded in RMD Field 0 610 related to disc general information.

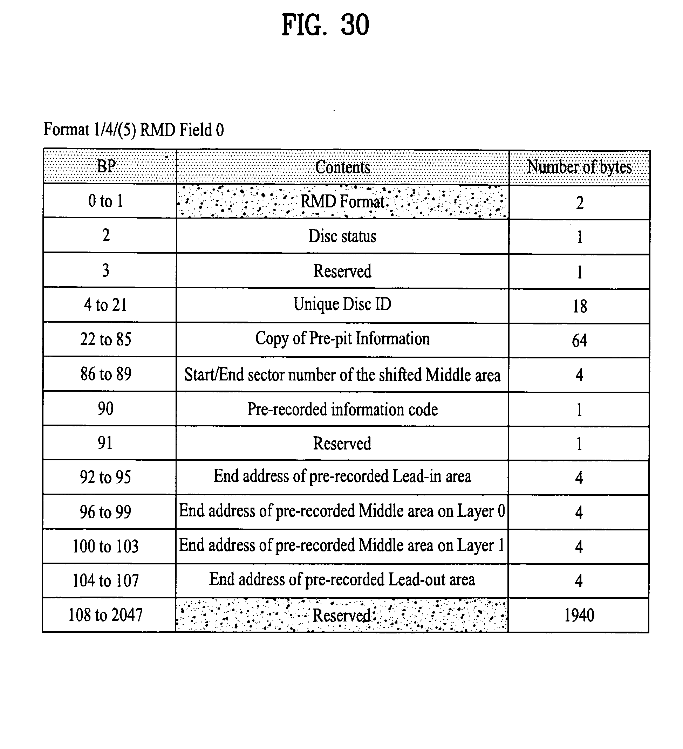

FIG. 30 is a table illustrating RMD field 0 610 in which general disc information is recorded inn the DVD-DL. As stated before, Format 1, Format 4 and Format 5 are identified by the value of BP 0 to 1. RMD Field 0 610 includes RMD Format identifying an RMD format, Disc status, Unique disc ID, Copy of Pre-pit Information, Start sector number of the shifted middle area, Pre-recorded information code, End address of pre-recorded lead-in area, End address of pre-recorded middle area on Layer 0, End address of pre-recoded middle area on Layer 1, End address of pre-recorded lead-out area, and Reserved.

The data archiving information listed in FIG. 24 may be recorded in RMD Field 2 620 illustrated in FIGs. 27 and 28. Another data archiving information including an estimated archival lifetime, an accreditation result, and a recommended test interval may be recorded in the Reserved area of RMD Field 0 610 illustrated in FIG. 30.

FIGs. 31 to 38 illustrate various recording media on which the estimated archival lifetime information of FIGS. 8 and 9 is recorded.

FIGs. 31 and 32 illustrate recording of an expected archiving lifetime of a disc in the BCA 400 illustrated in FIG. 15.

Referring to FIG. 31, recording of the lower limit X₁ of the estimated archival lifetime is followed by recording of the upper limit X₂ of the estimated archival lifetime, or vice versa. Referring to FIG. 32, the estimated archival lifetime may be recorded as a grade in a Record Data area.

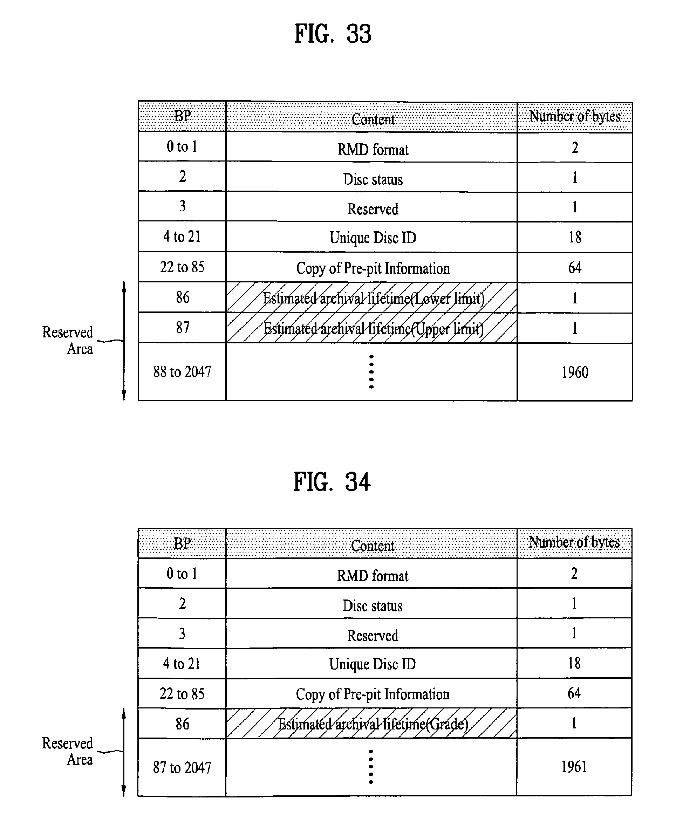

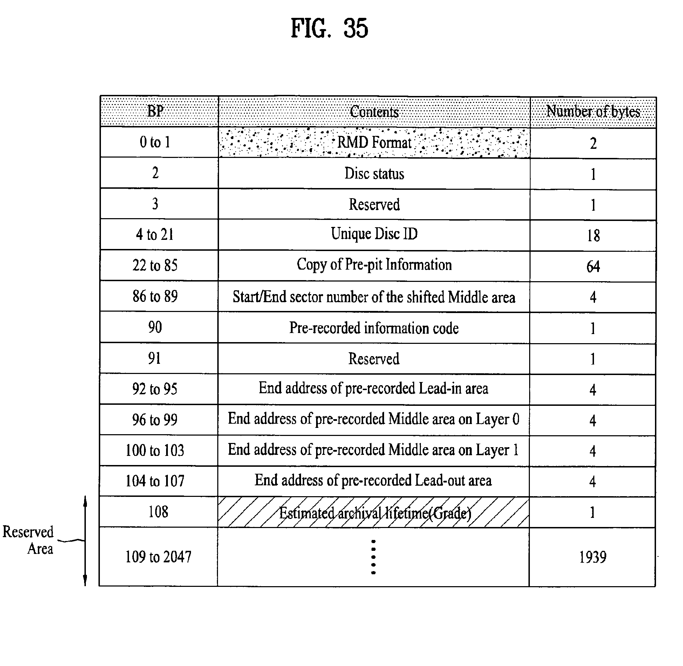

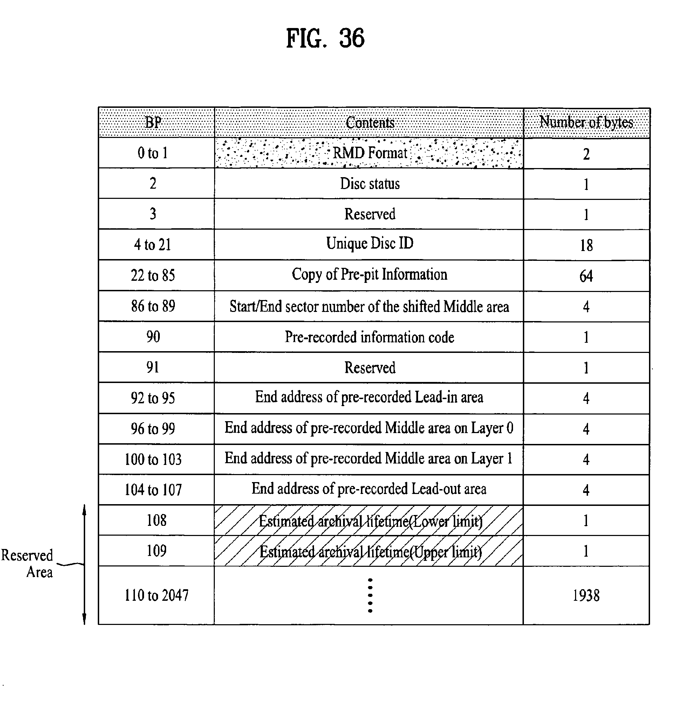

FIGs. 33 to 36 illustrate recording of the estimated archival lifetime of the disc in the RMA 502 illustrated in FIG. 21 and the RMA 601 illustrated in FIG. 26. Specifically, FIGs. 33 and 34 are for a single-layer disc and FIGs. 35 and 36 are for a dual-layer disc.

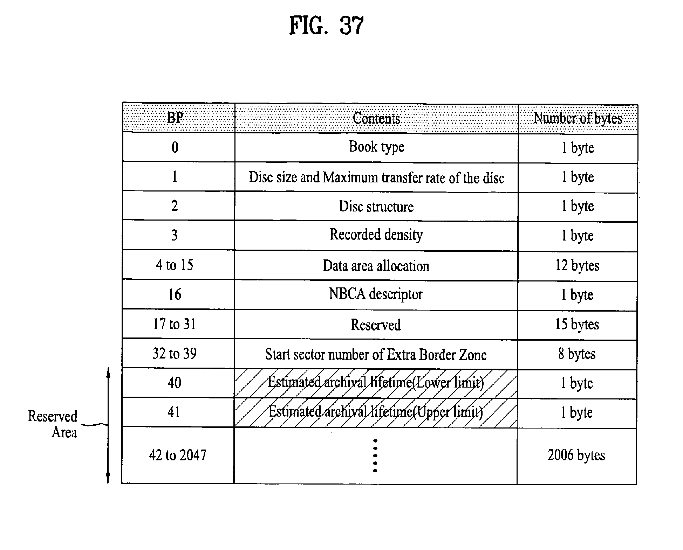

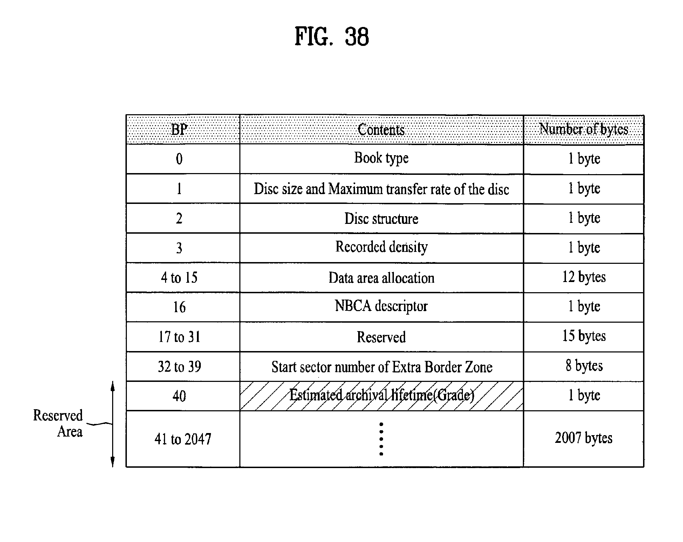

FIGs. 37 and 38 illustrate recording of the estimated archival lifetime of the recording medium in the control data zone 160 of FIG. 3.

The control data zone 160 illustrated in FIG. 3 may have the information illustrated in FIGs. 37 and 38. The control data zone 160 includes Book type indicating Readable (R), Random Access Memory (RAM) or Re-Writable (RW), Disc size and maximum transfer rate of the disc indicating a disc size and a data rate, Disc structure indicating a disc structure like layers, Recorded density, Data area allocation, NBCA descriptor indicating the presence or absence of a BCA/NBCA, Start sector number of extra border zone indicating the start sector number of an extra border zone, and Reserved.

The lower and upper limits of the estimated archival lifetime, X₁ and X₂ may be recorded in one byte in the Reserved area, as illustrated in FIG. 37. Alternatively, the estimated archival lifetime may be recorded as a grade in the Reserved area as illustrated in FIG. 38.

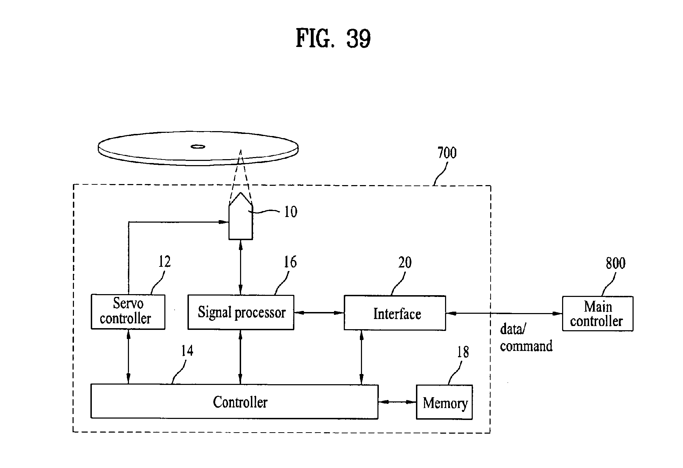

FIG. 39 is a schematic view illustrating a data archiving system according to an exemplary embodiment of the present invention.

Referring to FIG. 39, the data archiving system largely includes a recording/reproduction apparatus 700 and a main controller 800. The recording/reproduction apparatus 700 includes a pick-up 10, a servo controller 12, a controller 14, a signal processor 16, a memory 18, and an interface 20.

The pick-up 10, which includes a Laser Diode (LD), records data on the surface of a recording medium or reads a signal reflected from the surface of the recording medium.

The server controller 12 controls tracking and focusing of the pick-up 10 based on a control signal received from the controller 14.

The controller 14 generates the control signal for controlling the tracking and focusing of the pick-up 10 according to a signal received from the signal processor 16. Also, the controller 14 controls the pick-up 10 in order to read the result of an archival suitability test recorded in a management area that stores management information with which to manage information recorded on the recording medium. If the management area is a control data zone for recording user data control information in a lead-in area of the recording medium, the controller 14 may control the pick-up 10 to read the archival suitability test result. If the management area is a BCA positioned inner than the lead-in area, for recording code-related information of the recording medium, the controller 14 may control the pick-up 10 to read the archival suitability test result. If the management area is an RMA positioned inner than the lead-in area, for managing recording of user data, the controller 14 may control the pick-up 10 to read the archival suitability test result.

The controller 14 may control the pick-up 10 to reproduce data archiving information including an estimated archival lifetime of the recording medium. Information about the estimated archival lifetime may be recorded as a range which is defined by the lower and upper limits of the estimated archival lifetime. Alternatively, the information about the estimated archival lifetime may be recorded as a grade.

The controller 14 may control the pick-up 10 to reproduce data archiving information including an accreditation result of the recording medium. Or the controller 14 may control the pick-up 10 to reproduce data archiving information including information about a recommended test interval.

During data reproduction, the signal processor 16 receives a read signal from the pick-up 10 and recovers the read signal to an intended signal value. During data recording, the signal processor 16 modulates data to be recorded to a signal recordable on the recording medium and provides the modulated signal to the pick-up 10.

The memory 18 functions as a buffer for temporarily storing management information or data to be recorded and reproduced.

The interface 20 transmits a recording or reproduction command received from the main controller 800 to the controller 14 such that the controller 14 controls each component of the recording/reproduction apparatus 700.

The main controller 800 provides the recording or reproduction command to the interface 20 of the recording/reproduction apparatus 700. The main controller 800 may be a main controller of a computer, a server, an audio device, or a video device. That is, the recording/reproduction apparatus 700 may be an optical drive for a PC or a player that is not installed to a PC or the like.

Therefore, the recording/reproduction apparatus 700 according to the exemplary embodiment of the present invention is applicable to either of the optical drive built in a PC and the stand-alone player.

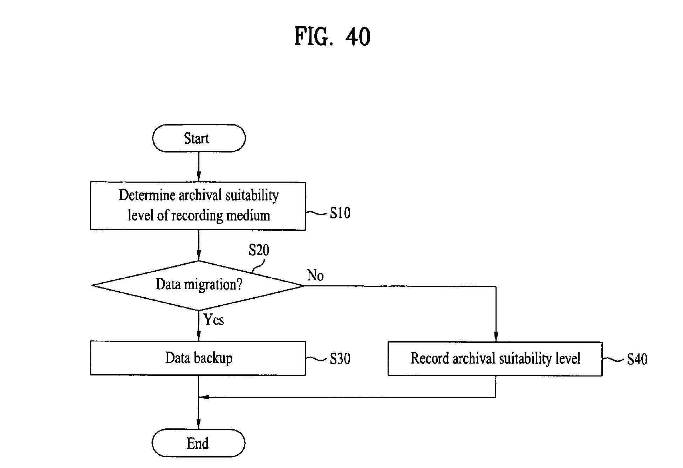

FIG. 40 is a flowchart illustrating a data recording method according to an exemplary embodiment of the present invention.

Referring to FIG. 40, the archival suitability of a recording medium having a management area in which data archiving information is recorded is determined in step S10. For a DVD-DL R, for example, a maximum inner parity error is measured in n successive ECC blocks. For a DVD-DL RAM, a maximum byte error rate is measured. An archival suitability level is determined based on the maximum inner parity error or the maximum byte error rate. For example, archival suitability levels 1, 2 and 3 are defined in an ascending order of maximum inner parity errors or maximum byte error rates. A verifier for determining the archival suitability level should be able to measure the maximum inner parity error or the maximum byte error rate.

In step S20, it is determined according to the archival suitability level whether data stored in the recording medium is to be backed up. If the data backup is needed, i.e. the data needs to be moved to another recording medium, the data is backed up in step S30. For example, a data backup may be determined for a recording medium with the lowest archival suitability level, level 3 and it may be determined to keep a recording medium with level 1 or level 2. If no data backup is needed, the archival suitability test result is recorded in the management area of the recording medium in step S40.

For example, if the recording medium has a relatively high archival suitability level compared to other recording media, that is, the recording medium has level 1 or level 2, the archival suitability test result illustrated in FIG. 5 is recorded in Field 2 or Field 14 in step S40.

If it is determined that the recording medium has a low archival suitability level, for example, if the recording medium has the lowest archival suitability level, level 3 due to lifetime expiration or defects requiring disposal, the data stored in the recording medium is backed up, for data migration in step S30.

### [Mode for Invention]

Various embodiments have been described in the best mode for carrying out the invention.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A recording medium, comprising:
a data area for recording user data; and
a management area for recording management information to manage data recorded on the recording medium,
wherein the management information includes data archiving information.

2. The recording medium according to claim 1, wherein the management area is a control data zone included in a lead-in area of the recording medium, for recording control information about the user data.

3. The recording medium according to claim 1, wherein the management area is a burst cutting area positioned inner than a lead-in area of the recording medium, for recording code-related information about the recording medium.

4. The recording medium according to claim 1, wherein the management area is a recording management area positioned inner than a lead-in area of the recording medium, for managing recording of the user data.

5. The recording medium according to any of claims 2, 3 and 4, wherein the data archiving information includes information about an estimated archival lifetime of the recording medium.

6. The recording medium according to claim 5, wherein the information about the estimated archival lifetime is recorded in the form of a range.

7. The recording medium according to claim 6, wherein the range is defined by lower and upper limits of the estimated archival lifetime.

8. The recording medium according to claim 6, wherein the range is recorded as grade information about the estimated archival lifetime.

9. The recording medium according to any of claims 2, 3 and 4, wherein the data archiving information includes information about an accreditation result of the quality of the recording medium.

10. The recording medium according to any of claims 2, 3 and 4, wherein the data archiving information includes information about a recommended test interval for data archival in the recording medium.

11. The recording medium according to any of claims 2, 3 and 4, wherein the recording medium includes a plurality of layers.

12. The recording medium according to claim 11, wherein the data archiving information is recorded in a sequential manner from one layer to another layer or simultaneously in the plurality of layers.

13. A data recording method comprising:
determining an archival suitability of a recording medium including a management area for recording management information to manage data recorded on the recording medium; and
determining whether to move the information recorded on the recording medium to another recording medium according to the determined archival suitability.

14. The data recording method according to claim 13, further comprising recording the determined archival suitability in the management area.

15. The data recording method according to claim 13, further comprising backing up the information recorded on the recording medium.

16. A data reproduction method comprising:
reading a result of an archival suitability determination about a recording medium including a management area for recording management information to manage data recorded on the recording medium.

17. A data recording apparatus comprising:
a pick-up for recording data on a recording medium; and
a controller for controlling the pick-up to record a result of a archival suitability determination about the recording medium in a management area for recording management information to manage data recorded on the recording medium.

18. The data recording apparatus of claim 17, wherein the controller determines whether to move the information recorded on the recording medium.

19. The data recording apparatus of claim 17, wherein the controller controls the pick-up to back up the information recorded on the recording medium.

20. A data reproduction apparatus comprising:
a pick-up for reproducing data by projecting light onto a recording medium; and
a controller for controlling the pick-up to read a result of a archival suitability determination about the recording medium from a management area for recording management information to manage data recorded on the recording medium.

21. The data reproduction apparatus according to claim 20, wherein if the management area is a control data zone included in a lead-in area of the recording medium, for recording control information about user data, the controller controls the pick-up to read the archival suitability determination result.

22. The data reproduction apparatus according to claim 20, wherein if the management area is a burst cutting area positioned inner than a lead-in area of the recording medium, for recording code-related information about the recording medium, the controller controls the pick-up to read the archival suitability determination result.

23. The data reproduction apparatus according to claim 20, wherein if the management area is a recording management area positioned inner than a lead-in area of the recording medium, for managing recording of user data, the controller controls the pick-up to read the archival suitability determination result.

24. The data reproduction apparatus according to any of claims 21, 22 and 23, wherein the controller controls the pickup to reproduce data archiving information including information about an estimated archival lifetime of the recording medium.

25. The data reproduction apparatus according to claim 24, wherein the information about the estimated archival lifetime is recorded in the form of a range.

26. The data reproduction apparatus according to claim 25, wherein the range is defined by lower and upper limits of the estimated archival lifetime.

27. The data reproduction apparatus according to claim 25, wherein the range is recorded as grade information about the estimated archival lifetime.

28. The data reproduction apparatus according to any of claims 21, 22 and 23, wherein the controller controls the pickup to reproduce data archiving information including information about an accreditation result of the quality of the recording medium.

29. The data reproduction apparatus according to any of claims 21, 22 and 23, wherein the controller controls the pickup to reproduce data archiving information including information about a recommended test interval for data archival in the recording medium.

30. The data reproduction apparatus according to any of claims 21, 22 and 23, wherein the recording medium includes a plurality of layers.

31. The data reproduction apparatus according to claim 30, wherein the data archiving information is recorded in a sequential manner from one layer to another layer or simultaneously in the plurality of layers.
